# NEUE EUROPÄISCHE PATENTSCHRIFT

(11) **EP 0 657 062 B2**
(45) Veröffentlichungstag und Bekanntmachung des Hinweises auf die Entscheidung über den Einspruch: **27.03.2002**
(45) Hinweis auf die Patenterteilung: 19.03.1997
(21) Anmeldenummer: 93917545.1
(22) Anmeldetag: 11.08.1993
(51) Int. Cl.: H01C 10/10, H02H 9/02, H01C 10/12

(54) **VERÄNDERBARER HOCHSTROMWIDERSTAND UND ANWENDUNG ALS SCHUTZELEMENT**
CHANGEABLE HIGH-CURRENT RESISTOR AND ITS USE AS A PROTECTIVE COMPONENT
RESISTANCE MODIFIABLE POUR COURANT FORT ET SON UTILISATION COMME ELEMENT DE PROTECTION

(30) Priorität: 26.08.1992 DE 4228297
(43) Veröffentlichungstag der Anmeldung: 14.06.1995
(73) Patentinhaber: SIEMENS AKTIENGESELLSCHAFT, 80333 München (DE)
(72) Erfinder: GROSSE-WILDE, Hubert, D-91077 Neunkirchen (DE); KIESER, Jörg, D-91301 Forchheim (DE); JAEHNER, Wilfried, D-90482 Nürnberg (DE); POHL, Fritz, D-91334 Hemhofen (DE); STEGER, Reinhard, D-92237 Sulzbach Rosenberg (DE); VOGEL, Gert, D-92224 Amberg (DE)
(86) Internationale Anmeldenummer: DE9300721
(87) Internationale Veröffentlichungsnummer: WO9406130

(56) Entgegenhaltungen:
- WO-A-91/12643
- DE-A- 272 807
- US-A- 3 386 067
- US-A- 3 806 471
- US-A- 4 745 301
- ELEKTROTECHNISCHE ZEITSCHRIFT, AUSGABE A Nr. 7 , 1. April 1952 , BERLIN DE Seiten 199 - 200 KLEINSTEUBER 'Der Kohledruckspannungs- oder stromregler' in der Anmeldung erwähnt

## Beschreibung

Die Erfindung bezieht sich auf einen veränderbaren Hochstromwiderstand, insbesondere zur Anwendung als Schutzelement in der Leistungsschalttechnik, mit wenigstens Kohlenstoff als Widerstandsmaterial. Daneben bezieht sich die Erfindung auf Schaltungen unter Verwendung eines solchen Hochstromwiderstandes. Vorzugsweise können bei solchen Schaltungen ein Leistungsschalter, ein Leistungshalbleiter, ein Schütz oder ein Vakuumschütz als Schaltelement vorhanden sein.

In elektrischen Niederspannungsverteilungen müssen aus Sicherheitsgründen die Leistungsschalter den im Kurzschlußfall zu erwartenden maximalen Kurzschlußstrom abschalten können. Dieser Strom kann in der Nähe von Sammelschienen 50 kA oder auch 100 kA betragen. Leistungsschalter mit dieser Schaltleistung müssen in einer Zeit, die klein in bezug auf die Zeitdauer einer Netzperiode ist, die Kontakte öffnen und eine hohe Lichtbogenspannung aufbauen, um den Kurzschlußstrom ausreichend zu begrenzen.

Letzere Schalter sind konstruktiv aufwendig und dementsprechend teuer. Um einfachere Schalter mit geringer Schaltleistung bei großen prospektiven Kurzschlußströmen einsetzen zu können, sind Geräte oder Vorrichtungen erforderlich, die dem Leistungsschalter helfen, den Strom im Kurzschlußfall zu begrenzen und abzuschalten.

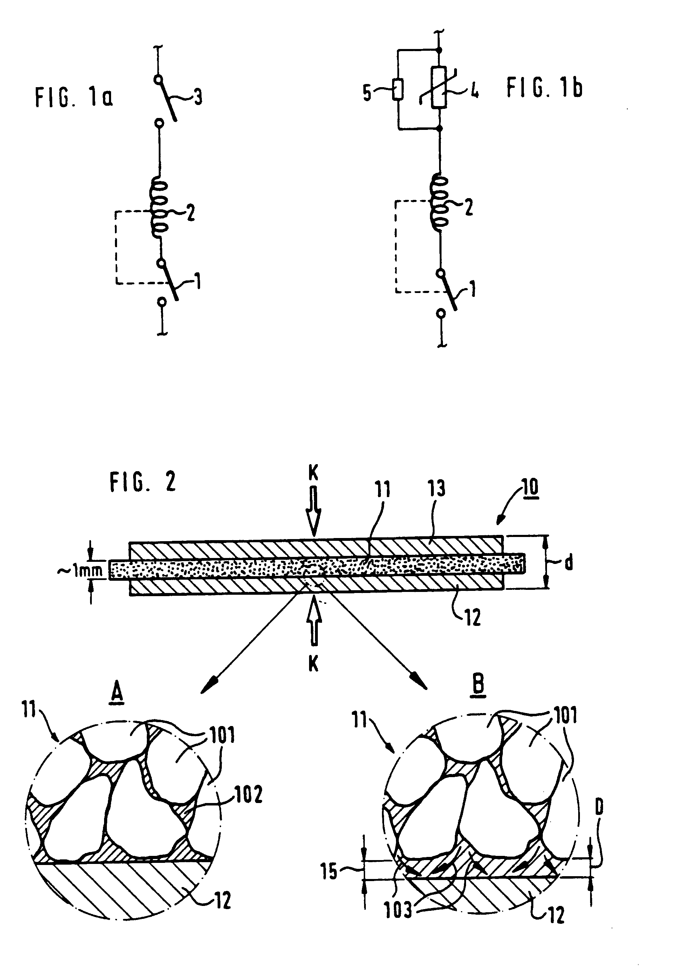

Für letzteren Zweck werden bisher sogenannte Stromlimiter eingesetzt, die mit dem Leistungsschalter in Reihe geschaltet werden, was beispielsweise in FIG 1a dargestellt ist. Unter "Limitern" werden im allgemeinen Schaltgeräte ohne Schaltschloß verstanden, bei denen die Kontakte im Kurzschlußfall durch die Stromkräfte öffnen: Die dabei entstehende Lichtbogenspannung hilft dem Leistungsschalter, den im Kurzschlußkreis fließenden Strom zu begrenzen und abzuschalten.

Eine andere Möglichkeit der Strombegrenzung besteht darin, in Serie mit dem Leistungsschalter einen Widerstand zu schalten, der bei Nennstrom oder zulässigem Überstrom einen sehr niedrigen Wert hat und der bei Überschreiten einer gewissen Stromschwelle innerhalb kurzer Zeit hochohmig wird. Damit liegt im Kurzschlußkreis ein zusätzlicher Widerstand, der den Strom auf ungefährliche Werte begrenzt. Widerstände mit der oben beschriebenen Charakteristik werden als PTC-Widerstände (positive temperature coeffizient) oder Kaltleiter bezeichnet. Für Anwendungen in der Niederspannung ist aus der WO-A-91/12643 eine Schaltungsanordnung unter Verwendung eines derartigen Widerstandes vorgeschlagen worden. Der dort beschriebene veränderbare Hochstromwiderstand besteht im wesentlichen aus einer mit Ruß gefüllten Polyethylenschicht, die einen PTC-Effekt aufweist. Im wesentlichen Gleiches wurde bereits mit der WO-A-90/00825 für Schutzeinrichtungen bei Kleinspannungen vorgeschlagen.

Daneben wird in der EP-A-0 487 920 im einzelnen ein PTC-Element mit wenigstens einem Widerstandskörper aus einer elektrisch leitfähigen Polymerzusammensetzung mit positivem Temperaturkoeffizient beschrieben, bei dem jeder Widerstandskörper zwei vorzugsweise parallele Oberflächen hat, wobei zumindest eine Grenzfläche mit Elektroden zum Einbringen des Stromes in das PTC-Element verbunden ist. Zur Gewährleistung des PTC-Effekts soll bei diesem als Schutzelement verwendbarem Hochstromwiderstand der Polymer-Widerstandskörper mit seinen Grundflächen mit einer Elektrode verbunden sein, wobei wenigstens eine Fläche einen sogenannten freien Kontakt mit der zugeordneten Elektrode bildet und wobei eine Druckeinrichtung vorhanden ist, die einen Druck senkrecht auf die Elektroden und die Grundflächen des Widerstandskörpers der leitfähigen Polymerschicht ausübt. Durch elektrodynamische Abstoßung bei hohen Strömen wird der Kontakt verändert, wobei sich durch gleichzeitige Temperaturerhöhung eine flüssige Phase im Polymerwerkstoff bilden soll.

Weiterhin ist aus der DE-A-0 272 807 ein Regulierwiderstand bekannt, bei welchem die Widerstandsänderungen durch Änderungen des Druckes eines Elektromagnetankers auf eine Körnermasse, die insbesondere Kohlenstoffpulver enthält, erfolgt. Schließlich ist aus der ETZ (A) 73, 199 (52) ein Kohledruckregler bekannt, der auf einer druckabhängigen Veränderung des Übergangswiderstandes säulenartig angeordneter Kohleplättchen oder Ringe beruht. Mit diesem Kohledruckregler wird eine Spannung oder ein Strom geregelt, in dem bei steigendem Wert der Regelgröße durch Steuerung eines Elektromagneten eine steigende Magnetkraft der Vorspannung einer Säule aus Kohleplättchen entgegenwirkt. Es sollen Widerstandsänderungen um den Faktor 300 möglich sein.

Aufgabe der Erfindung ist es demgegenüber, einen Hochstromwiderstand der eingangs genannten Art derart zu verbessern, daß er mit der für Schutzeinrichtungen erforderlichen Sicherheit als Limiter einsetzbar ist. Dazu sollen die zugehörigen Schaltungen angegeben werden.

Die Aufgabe wird erfindungsgemäß gelöst durch einen veränderbaren Hochstromwiderstand mit den Merkmalen des Anspruchs 1.

Vorteilhafterweise sind zusätzliche Mittel zur Verminderung der Kraft entsprechend dem fließenden Strom vorhanden. Insbesondere zur Ausbildung als Schutzelement kann dabei im Kurzschlußfall bei Überschreiten einer vorgebbaren Stromschwelle, beispielsweise dem 15fachen von Iₙₑₙₙ, in einer Zeit, die gegenüber der Netzperiode klein ist, der Widerstand in der Übergangszone auf etwa das 100fache ansteigen und somit in sicherer Weise den Kurzschlußstrom auf ungefährliche Werte begrenzen.

Unter "Widerstand" wird im Rahmen der Erfindung der Quotient aus Spannungsabfall am Hochstromwiderstand und dem Strom durch den Widerstand verstanden. Der nach außen wirksame Spannungsabfall ergibt sich dabei aus der Stromverteilung in dem flächig ausgedehnten Widerstandskörper und Hintereinanderschaltungen von Spannungsabfällen auf mikroskopischer Ebene. Diese Spannungsabfälle können beim erfindungsgemäßen Hochstromwiderstand in den Ruß- und/oder Kohlepartikeln auftreten oder an den Berührungszonen benachbarter Partikel. Ebenso sind insbesondere in der Übergangszone auch elektrische Gasentladungen zwischen leitfähigen Partikeln möglich.

Durch die gezielte Beeinflussung der Anpreßkraft und deren Verminderung gemäß der Erfindung ergeben sich insbesondere gegenüber dem PTC-Element gemäß der EP-A-0 487 920 Vorteile. Der dort verwendete leitfähig gemachte Polymerwerkstoff wird oberhalb einer gewissen Temperatur, die für Polyethylen bei etwa 120°C liegt, hochohmig, wobei die Aufheizung bei den bekannten Elementen durch den Kurzschlußstrom erfolgt und insbesondere die flächige Kontaktstelle zwischen einer metallischen Elektrode und dem leitfähigen Polyethylenkörper zur Aufheizung der Polyethylenoberfläche beiträgt. Demzufolge muß beim Stand der Technik der Kaltleitereffekt so eingestellt werden, daß der Widerstandshub in einer dünnen Polyethylenschicht die Strombegrenzung bewirkt.

Demgegenüber wird bei der Erfindung die Tatsache ausgenutzt, daß der elektrische Widerstand an einer mechanisch lösbaren Kontaktstelle von der Kontaktkraft abhängt und zwar in der Weise, daß der Widerstand mit abnehmender Kontaktkraft definiert zunimmt. Vorteilhafterweise kann an der lösbaren Kontaktstelle die Stromdichte klein gehalten werden, so daß Zerstörungen der Elektrodenoberflächen durch hohe Energiedichten vermieden werden. Dabei erweist es sich als vorteilhaft, Ruß- oder Kohleschichten zumindest an einer Seite der lösbaren Kontaktstelle zu verwenden, weil die kraftabhängige Widerstandsänderung bei diesen Werkstoffen groß ist. Insbesondere ist eine feinpulvrige Ruß- oder Kohleschicht als Kontaktschicht vorteilhaft. Diese Schicht kann beispielsweise von vorhergegangenen mechanischen oder thermischen Beanspruchungen herrühren.

Im Gegensatz zur EP-A-0 487 920, bei der ausschließlich auf den PTC-Effekt ausgenutzt wird, können bei der Erfindung auch solche Schichten benutzt werden, die keinen Kaltleitereffekt zeigen. Insbesondere können aber geglühte Sinterkörper aus diesen Materialien oder mit Kunstharz als Bindemittel versetzte Preßkörper verwendet werden. Um eine weitgehend gleichmäßige Stromverteilung in der lösbaren Kontaktoberfläche zu bekommen, sollte der Widerstand dieser Körper nicht zu klein sein. Der Widerstand läßt sich aber durch die Zusammensetzung der Sinter- oder Preßkörper beeinflussen. Günstige Werte des Widerstandes liegen zwischen 0,1 Ω.cm und 1 Ω.cm.

Mit der Erfindung ist ein funktionsfähiges Schutzelement geschaffen, das wie ein Kaltleiter in Serie mit einem Leistungsschalter in den Stromkreis einer Niederspannungsverteilung geschaltet werden kann. Auch Anwendungen in Verbindung mit Leistungshalbleitern, Schützen oder Vakuumschützen sind möglich.

Mit dem erfindungsgemäßen Hochstromwiderstand kann erreicht werden, daß für Ströme < 12 bis 15 × Iₙₑₙₙ der Widerstand des Schutzelementes so klein ist, daß die Verlustleistung im Element bei Iₙₑₙₙ höchstens einige Watt pro Strombahn beträgt: Beispielsweise für Iₙₑₙₙ = 20 A kann der Widerstand 2 mOhm betragen, so daß die Verlustleistung bei 20 A etwa 800 mW beträgt. Steigt der Strom über 15 × Iₙₑₙₙ an, so wächst der Widerstand auf das 100fache oder mehr: Hierdurch wird der Kurzschlußstrom auf ungefährliche Werte begrenzt. Befinden sich Induktivitäten im Kreis, was im allgemeinen bei Niederspannungsnetzen der Fall ist, so kann der Strom auf einen Parallelstromzweig kommutiert werden, damit der erfindungsgemäße Hochstromwiderstand nicht durch hohe Verlustleistung geschädigt wird. Dabei kommt beispielsweise ein Konstantwiderstand oder ein spannungsabhängiger Widerstand für den Parallelstromzweig in Frage.

In Ausnutzung eines an sich bekannten Effektes besitzt das Schutzelement wenigstens eine Berührungsfläche aus einer metallischen Elektrode und einer ruß- oder kohlehaltigen elektrisch leitfähigen Schicht oder wenigstens eine Berührungsfläche zweier ruß- und/ oder kohlehaltiger Schichten. Der Stromfluß geht durch diese Berührungsfläche. Bei Nennstrom oder zulässigem Überstrom werden die metallische Elektrode und die ruß- und/oder kohlehaltigen Schichten mit einer Kraft zusammengepreßt, die den Übergangswiderstand hinreichend klein macht. Im Kurzschlußfall wird bei Überschreiten einer Stromschwelle durch die Druckentwicklung zwischen Elektrode und ruß- und/oder kohlehaltigen Schichten in einer Zeit, die klein ist im Vergleich zur Zeitdauer einer Netzperiode, diese Kraft soweit vermindert, daß der Widerstand in der Grenzschicht der Berührungsfläche im gewünschten Sinne ansteigt.

Wie beim Säulenwiderstand lassen sich bei dem erfindungsgemäßen Hochstromwiderstand auch mehrere vorstehend beschriebene Grenzschichten hintereinander schalten. Die ruß- und/oder kohlehaltigen Schichten sind vorzugsweise runde oder rechteckige Plättchen, bei denen die Ruß- bzw. Kohlepartikel durch Bindemittel zusammengehalten werden.

Letztere Bindemittel definieren gleichzeitig die Mittel zur Verminderung der Anpreßkraft und sind demzufolge zu wählen. Die weiteren Mittel zur Verminderung der Anpreßkraft können entweder auf dem elektromagnetischen Prinzip oder aber in der Ausnutzung von piezoelektrischen Stellelementen beruhen. Insbesondere in letzteren Fällen ist durch die extern steuerbare Kraft die Anpreßkraft gezielt verminderbar.

Weitere Einzelheiten und Vorteile der Erfindung ergeben sich aus der nachfolgenden Figurenbeschreibung von Ausführungsbeispielen anhand der Zeichnung. Es zeigen die
- FIG 1a and 1b: zwei Schattungsanordnungen des Standes der Technik,
- FIG 2: im Querschnitt einen Hochstromwiderstand mit ersten Mitteln zur Druckgenerierung zwecks Kraftverminderung mit zwei Funktionsausschnitten,
- FIG 3: eine elektromagnetisch gesteuerte Anordnung als zweites Mittel zur Kraftverminderung,
- FIG 4: eine über einen piezoelektrischen Stellgeber gesteuerte Anordnung als drittes Mittel zur Kraftverminderung,
- FIG 5: die zur Aktivierung der Anordnung nach FIG 4 notwendige Schaltungsanordnung,
- FIG 6: einen aus mehreren Schichten gestapelten Hochstromwiderstand,
- FIG 7: einen in einen Leistungsschalter integrierten Hochstromwiderstand und
- FIG 8: eine Schaltungsmodifikation des Hochstromwiderstandes zur Erhöhung der Empfindlichkeit.

In den Figuren 1a und 1b bezeichnet 1 einen Leistungsschalter und 2 eine Magnetspule des Auslösers des Leistungsschalters 1. In FIG 1a ist dieser Anordnung ein sogenannter Lichtbogenlimiter 3 vorgeschaltet, bei dem beispielsweise die Kontakte im Kurzschlußfall durch die Stromkräfte öffnen. Alternativ dazu ist in FIG 1b dem Leistungsschalter 1 mit Magnetspule 2 ein Kaltleiter 4 vorgeschaltet, dem ein Widerstand 5 parallelgeschaltet ist. Der Kaltleiter hat im kalten Zustand einen geringen elektrischen Widerstand und im heißen Zustand einen hohen elektrischen Widerstand (sogenannter PTC-Effekt). Erwärmt wird der Kaltleiter durch den fließenden Strom selbst, wobei er nach Überschreiten einer gewissen Temperatur hochohmig wird. Der Parallelwiderstand 5 ist zur Entlastung des Kaltleiters und zur Begrenzung des Kurzschlußstromes vorhanden.

Zur Anwendung als Stromlimiter sind übliche Kaltleiter- bzw. PTC-Widerstände nur für vergleichsweise niedrige Spannungen und Ströme geeignet. PTC-Hochstromwiderstände aus leitfähig gemachtem Polymerwerkstoff werden in der EP-A-0 487 920 vorgeschlagen: Die Verwendung thermoplastischer Polymerwerkstoffe als Kaltleiter weist aber einige Eigenheiten auf, die beim Einsatz solcher bekannter PTC-Elemente als Strombegrenzer zu berücksichtigen sind:
- Die Stromwärme, die erforderlich ist, um die Oberfläche der Polymerschicht auf die kritische Temperatur aufzuheizen, ist proportional dem Temperaturhub von der Ausgangstemperatur bis zur kritischen Temperatur. Dies bedeutet im einzelnen, daß sich bei niedrigeren Ausgangstemperaturen schlechtere Schutzwerte als bei hohen Ausgangstemperaturen ergeben.
- Thermoplastkaltleiter können sich im Lauf einer langjährigen Betriebsdauer unter dem hohen Anpreßdruck der Elektroden, insbesondere bei erhöhten Temperaturen, verformen und damit ihre Ansprecheigenschaften ändern.
- Der Kaltleitereffekt und damit der Widerstandshub bei Erwärmung auf Temperaturen oberhalb der kritischen Temperatur hängt empfindlich vom Gefüge des Polymers ab. Nach einer Schaltung oder längerer Standzeit ohne Belastung kann sich der Widerstandshub wesentlich ändern, wodurch der Schutzeffekt in seiner Größe nicht in allen Fällen vorhersagbar ist.

Diese Nachteile lassen sich bei nachfolgenden Beispielen vermeiden.

In FIG 2 bedeutet 11 eine kohle- und/oder rußhaltige Schicht, die zwischen zwei metallische Elektroden 12 und 13 eingepreßt ist und zusammen mit diesen einen Hochstromwiderstand 10 bilden. Beispielsweise kann die kohle-/rußhaltige Schicht 11 eine Dicke von etwa 1 mm haben und eine Fläche von 10 cm² überdekken. Im einzelnen besteht die Schicht 11 aus einem porösen Material aus einzelnen Kohle-/Rußteilchen 101, dessen porenartige Hohlräume mit einem Bindemittel 102 ausgefüllt ist.

Als Bindemittel für obigen Zweck kommen Polymerwerkstoffe, wie beispielsweise Polyethylen, Polyester, aber auch Wachse, Fette, Teere, Peche u. dgl. in Frage.

Insbesondere zwischen der Schicht 11 und den Grenzflächen der Metallelektroden 12 und 13 entsteht eine Übergangszone 15, bei der die Struktur maßgeblich für das Widerstandsverhalten verantwortlich ist. Im Ausschnitt A ist die Grenzfläche und Übergangszone im Normalzustand dargestellt, wobei in diesem Fall ein geringer Widerstand vorliegt. Im Ausschnitt B ist der Kurzschlußfall gezeigt, wobei in diesem Fall ein hoher Widerstand vorliegt.

Bei dem in FIG 2 dargestellten Hochstromwiderstand 10 aus der Schicht 11 sowie den Elektroden 12 und 13 wird bei wachsendem Strom in der Übergangszone 15 infolge des Übergangswiderstandes Verlustwärme erzeugt, die bei Wahl eines geeigneten Bindemittels 102 zwischen den Ruß- bzw. Kohleteilchen 101 letzteres in gasförmige Zersetzungsprodukte 103 aufspalten kann. Die Zersetzungsprodukte 103 erzeugen in der Übergangszone bzw. der Grenzschicht einen Gegendruck zu dem Druck, der durch die äußere Anpreßkraft hervorgerufen wird. Dadurch vermindert sich die resultierende Anpreßkraft und der Widerstand steigt an.

Zur Realisierung letzteren Effektes in definierter und nachvollziehbarer Weise muß der Widerstandskörper aus der ruß- und/oder kohlehaltigen Schicht und dem Bindemittel in geeigneter Weise hergestellt werden. Zweckmäßigerweise kann die Herstellung der Schicht aus ruß- und/oder feinkömigem Kohlepulver zunächst mit Zusatz von Teer und Pech als Bindemittel und Verpreßen der Schicht bei niedrigem Druck erfolgen. Durch anschließendes Glühen dieser Schicht bei Temperaturen bis zu 1000°C entsteht eine elektrisch leitfähige, poröse Schicht. Dieser geglühte Widerstandskörper wird anschließend mit Wachs oder Fetten getränkt, die bei Temperaturen oberhalb von 200°C, beispielsweise bei 300°C, in gasförmige Zersetzungsprodukte zur Erzeugung des Druckes zerfallen.

Die ruß- und/oder kohlehaltige Schicht kann aber auch ohne Glühen und anschließendem Tränken hergestellt werden, indem ein Bindemittel gewählt wird, das selbst oberhalb von 200°C sich zumindest teilweise zersetzt. Derartige Bindemittel sind beispielsweise Polyethylen, Polyester oder Kunstharze.

Die ruß- und/oder kohlehaltige Schicht 11 kann in altemativer Ausbildung auch aus verfilzten Kohlefasern bestehen, die mit einem Bindemittel und gegebenenfalls auch mit zusätzlichen Ruß- oder Kohlepartikeln versetzt sind. Derartige Kohlefaserfilze zur Realisierung von leitfähigen, porösen und sehr elastischen Schichten sind an sich bekannt. Sie können gegebenenfalls auch in papier- oder folienartiger Konsistenz ausgeführt sein. Um diese zum Aufbau eines veränderbaren Widerstands einzusetzen, ist es erforderlich, in die Oberflächen der Schichten zusätzlich Ruß oder Kohlenstoff sehr fein und gleichmäßig verteilt einzubringen.

Beim beschriebenen veränderbaren Hochstromwiderstand 10 mit der kohle- und/oder rußhaltigen Schicht 11 und den Elektroden 12 bzw. 13 kann die Oberfläche der metallischen Elektroden strukturiert sein. Durch eine geeignete Strukturierung ist die Möglichkeit der Steuerung der Stromdichte gegeben. Insbesondere kann auch die kohle- und/oder rußhaltige Schicht komplementäre Strukturen besitzen, so daß Kräfte übertragen werden.

Bei dem Ausführungsbeispiel gemäß FIG 2 ergibt sich mit der gezielten Steuerung der Kraft neben einer Fremdsteuerung des Widerstandes gewissermaßen auch eine Eigensteuerung, wie sie auch schon beim Stand der Technik angegeben ist. Es läßt sich so die Kraftverminderung gezielt und reproduzierbar ausführen. Dabei muß beachtet werden, daß die Limitereigenschaften bei Fließen eines großen Kurzschlußstromes dadurch hervorgerufen werden, daß die infolge des Übergangswiderstandes hervorgerufene Verlustleistung die Oberfläche aufheizt und der Tränkwerkstoff an der Oberfläche gasförmig wird. Für eine folgende Abschaltung ist es wichtig, daß der Tränkwerkstoff aus dem Innern der kohle- und/oder rußhaitigen Schicht nachgeliefert und die Oberfläche wieder benetzt.

Zur Verminderung der Anpreßkraft lassen sich auch magnetische Kräfte ausnutzen. Bei einem geeignet geschalteten Hochstromwiderstand läßt sich bei ausreichend hohen Strömen eine Magnetkraft durch den Kurzschlußstrom selbst über ein Joch-Ankersystem erzeugen:

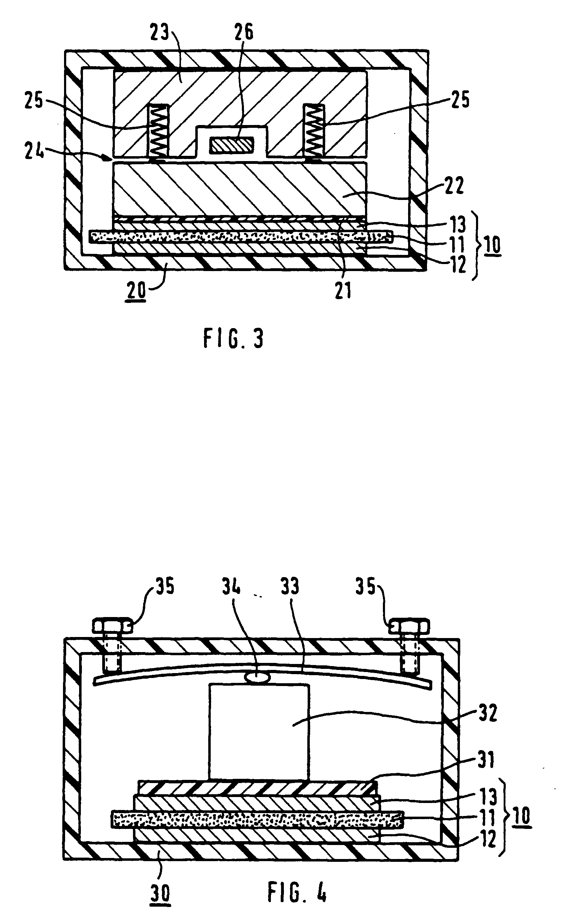

In FIG 3 ist eine Anordnung aus FIG 2 mit Schicht 11 und Elektroden 12 und 13 in ein Isoliergehäuse 20 mit einem Elektromagnet eingebracht. Neben dem Isoliergehäuse 20 bedeuten 21 eine Isolierplatte zur Auflage auf dem Hochstromwiderstand 10, 22 einen Magnetanker, 23 ein Magnetjoch, 24 einen Luftspalt, 25 ein Federkraftsystem und 26 die zugehörige Strombahn: Der Hochstromwiderstand 10 sowie Anker 22 und Joch 23 sind so in das Gehäuse 20 eingebaut, daß durch die Federelemente 25 zwischen Anker und Joch ein definierter Luftspalt einstellbar ist und daß die Federkraft auf die beiden Elektroden 12 und 13 sowie die kohle- und/oder rußhaltige Schicht 11 übertragen wird. Elektrisch sind die Strombahn 26 und der Strom durch den Hochstromwiderstand 10 in Reihe geschaltet.

Der elektrische Widerstand läßt sich nun durch den druckabhängigen Kontaktwiderstand jeder der beiden Elektroden 12 und 13 zur elektrisch leitenden Schicht 11 dadurch steuern, daß die Federkräfte ganz oder teilweise durch Magnetkräfte zwischen Anker 22 und Joch 23 kompensiert werden. Dadurch kann der Kontaktwiderstand bis zu drei Zehnerpotenzen erhöht werden, wobei die elektrische Verlustleistung stark ansteigt und durch thermische Zersetzung des Bindemittels 102 in Zersetzungsprodukte 103 weitere die Ankerschließbewegung unterstützende gasdynamische Kräfte, wie es im Prinzip anhand FIG 2 beschrieben ist, einwirken. Damit wird die effektive Anpreßkraft weiter verringert und der Kontaktwiderstand weiter erhöht.

Besonders vorteilhaft bei dieser Anordnung ist die Einstellbarkeit des Ansprechstromes der Strombegrenzungseinrichtung mittels Luftspaltweite auf definierte Kurzschlußstromwerte. Es ergibt sich ein relativ scharfer Ansprechstrom, der eine Folge des I²-abhängigen Kraftverlaufes der Magnetkraft zwischen Anker und Joch ist. Im Gegensatz zum Stand der Technik wird der Strombegrenzungsmechanismus hier nicht durch die elektrische Verlustleistung ( (I×U)dt), sondern durch den Momentanstrom (I) gesteuert. Die Steuerung passiert dabei selbsttätig durch den Stromanstieg über eine einstellbare Ansprechstromschwelle. Dadurch wird ein schnelles Ansprechen bei gleichzeitiger Vermeidung der Fehlabschaltung durch länger andauernde Überströme erreicht.

Alternativ zu der beschriebenen Kombination der magnetisch und über den Gasdruck des Bindemittels erzeugten Gegenkraft zur Verminderung der Anpreßkraft kann ein derartiges System auch nur magnetisch arbeiten. Bei dieser Art der Druckminderung muß dann ein Bindemittel gewählt werden, das sich bei den auftretenden Temperaturen nicht zersetzt. Dies kann durch Tempern bei mehreren 100°C geschehen, wenn Teere und Peche als Bindemittel verwendet werden.

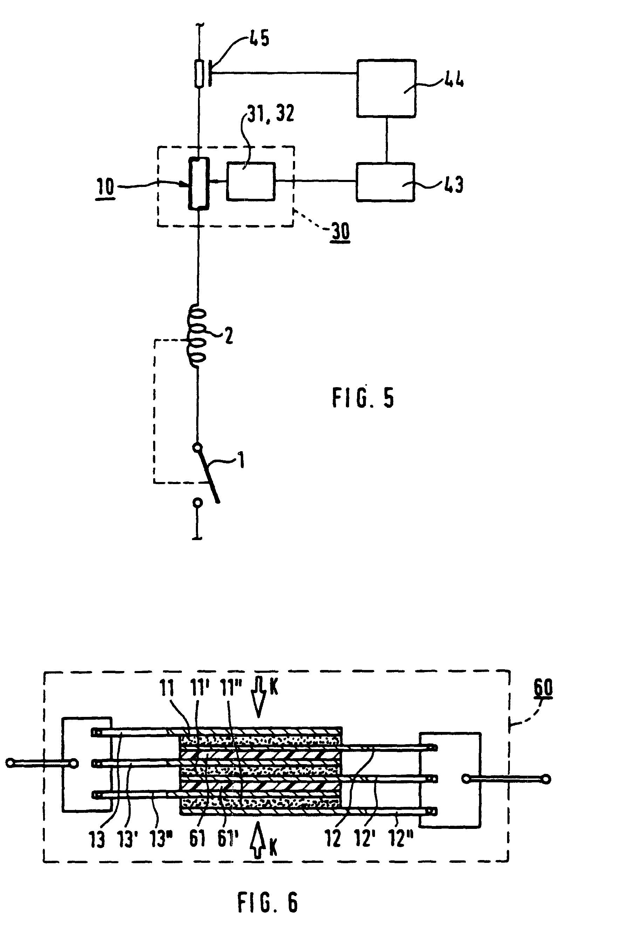

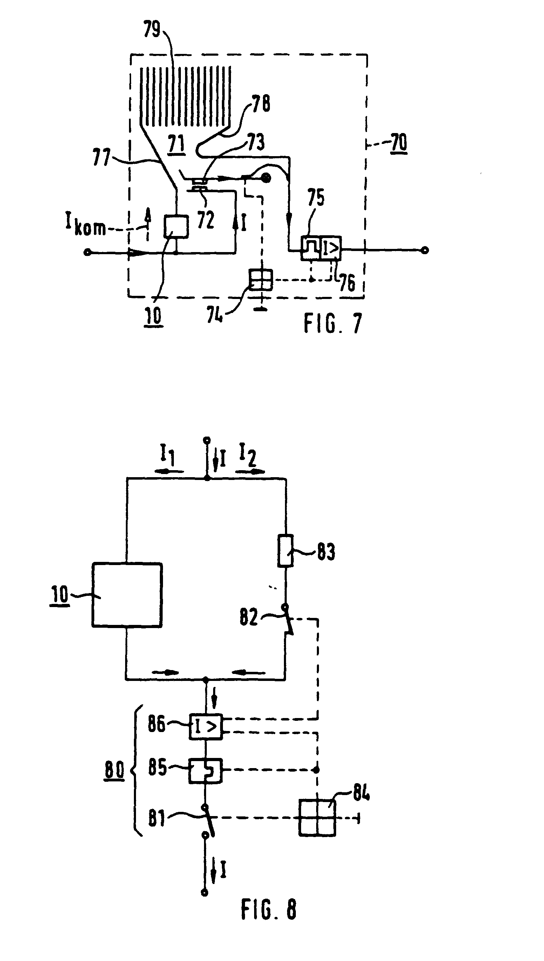

FIG 3 kann das neue Prinzip eines anmeldungsgemäßen Limiters im Vergleich zum Stand der Technik verdeutlichen. Bei der EP-A-0 487 929 soll in den Figuren 6 und 7 eine Anpreßkraft durch ein Anker-Joch-System in der Weise erzeugt werden, daß die Kontaktstelle mit erhöhter Kraft zusammengepreßt wird. Dagegen dienen bei dem vorstehend beschriebenen Ausführungsbeispiel die elektromagnetischen Mittel zur Verminderung der Anpreßkraft und damit Schwächung der Kontaktkraft, wodurch eine Widerstandserhöhung bewirkt wird.

In den anhand FIG 2 und 3 beschriebenen Beispielen erfolgt das Ansprechen des strombegrenzenden Widerstandes selbsttätig durch den Kurzschlußstrom. Der Moment für das Eintreten der Widerstandserhöhung auf den strombegrenzenden Wert beim Beispiel gemäß FIG 2 ist dadurch gegeben, daß die Oberflächentemperatur des Widerstandskörpers 11 auf die Zersetzungstemperatur des Tränkwerkstoffs bzw. des Bindemittels angestiegen ist. Im Beispiel gemäß FIG 3 wird dieser Moment dadurch definiert, daß die Magnetkraft mit ihrem Anstieg ∼J² einen wesentlichen Teil der Druckkraft kompensiert oder auch überkompensiert.

Durch eine aktive elektrische Steuerung kann der Zeitpunkt der Widerstandsänderung gezielt beeinflußt werden. Hierzu ist insbesondere die Verwendung von piezoelektrischen Stellelementen geeignet: In FIG 4 ist der veränderbare Hochstromwiderstand 10 mit der Schicht 11 und den Elektroden 12 und 13 in ein Isoliergehäuse 30 eingebracht. Es bedeuten 31 eine Isolierplatte auf der oberen Elektrode 13, 32 ein piezoelektrisches Stellelement als Piezoelongator, 33 eine Blattfeder zur Kontaktkraftgenerierung mit zugehörigem Auflageelement 34 und Einstellschrauben 35. Im wesentlichen ähnlich wie in FIG 3 liegen die aktiven Elemente auf dem Hochstromwiderstand 10 auf; d.h. über der Isolierplatte 31 ist der Piezoelongator 32 angeordnet, der gegen das Gehäuse über die Blattfeder 33 abgestützt ist. Die elektrische Versorgung ist in FIG 4 nicht dargestellt. Der Piezoelongator 32 nutzt den sogenannten piezoelektrischen Quereffekt aus, d.h. er verkürzt seine Länge bei Anlegung einer Spannung von etwa 1 kV um etwa 0,5 bis 1 %.

Die Veränderung des Widerstandswertes des Hochstromwiderstandes erfolgt durch Ansteuerung des Piezoelongators 32 mit einer ausreichend hohen Spannung. Die Kontaktkraft in den Grenzschichten bzw. Übergangszonen des Widerstandselementes vermindert sich proportional zur Verkürzung des Piezoelongators 32 entsprechend der Federkonstante des verwendeten Federelementes 33. Es läßt sich beispielhaft ermitteln, daß bei einer Verkürzung des Piezoelongators 32 um 50 um bei geeigneter Federkonstante die Kontaktkraft um etwa 1500 N auf 500 N abnimmt.

Der piezoelektrisch betätigte Hochstromwiderstand gemäß FIG 4 wird eingesetzt in Verbindung mit einem Stromsensor 45, einem Auswerte- und Ansteuermodul 44, und einem Hochspannungspulsgerät 43. Die zugehörige Schaltung ergibt sich aus FIG 5. Mit dem Stromsensor 45 wird der Momentanstrom im Stromkreis erfaßt und in dem Auswerte- und Ansteuermodul 44 wird der Momentanstrom beispielsweise mit einer voreingestellten Stromschwelle verglichen. Übersteigt der Momentanstrom die voreingestellte Stromschwelle, wird ein Ansteuersignal erzeugt, das im Hochspannungspulsgerät 43 einen Hochspannungspuls von mehreren ms für den Piezoelongator 32 gemäß FIG 4 generiert. Durch die Verkürzung des Piezoelongators 32 vermindert sich die Kontaktkraft im Hochstromwiderstand, wodurch dessen Widerstand um bis zu drei Zehnerpotenzen ansteigt. Somit wird der Strom im Stromkreis begrenzt.

Statt der Anordnung des Piezoelongators gemäß FIG 4 mit Blattfeder können auch andere Kraftübertragungssysteme mit anderen Federanordnungen mit mittlerer Federkonstante aufgebaut werden. Insbesondere können Anordnungen mit Piezoelongatoren derart konzpiert werden, daß deren Masseschwerpunkt während des Impulsbetriebes etwa in Ruhe bleibt, so daß die verwendeten Kraftübertragungselemente während der Impulsdauer keine zur Federkraft wirkende Gegenkraft erhalten. Diese Gegenkraft kann vielmehr im Sekundenbereich von speziellen plastischen Zwischenstücken übernommen werden, welche bei rascher Belastung starr reagieren, bei Dauerbelastung jedoch ein Fließverhalten zeigen. Damit kann eine selbsttätige Nachführeinrichtung realisiert werden, welche bei Materialabtrag am eigentlichen Hochstromwiderstand 10 eine kraftschlüssige Positionierung des Piezoelongators 32 wieder herstellt.

Die vorstehend beschriebenen, nach unterschiedlichen Prinzipien gesteuerten, veränderbaren Hochstromwiderstände werden insbesondere in Verbindung mit einem Leistungsschalter verwendet. Dazu wird im wesentlichen eine Schaltung gemäß FIG 1b realisiert, bei dem dem veränderbaren Hochstromwiderstand ein Leistungsschalter elektrisch in Reihe geschaltet ist, der durch den Kurzschlußstrom ausgelöst wird und den Stromkreis letztlich unterbricht. Durch den Widerstandsanstieg des veränderbaren Hochstromwiderstandes wird der Kurzschlußstromanstieg rasch begrenzt und die Amplitude des Durchschlagstromes auf für den in Reihe geschalteten Leistungsschalter unkritische Werte begrenzt.

Um eine thermische Überlastung des veränderbaren Hochstrom-Widerstandes zu vermeiden, kann zur Stromentlastung ein zweiter Strompfad mit definiertem Widerstand oder definierter Ansprechspannung parallelgeschaltet sein. Dies ist insbesondere dann sinnvoll, wenn Induktivitäten in der Schaltung vorhanden sind, deren gespeicherte Energie im Kurzschlußfall den Hochstromwiderstand schädigen könnte.

Es kann sinnvoll sein, mehrere veränderbare Hochstromwiderstände als Elemente zur Strombegrenzung zu schalten, so daß bei Ansprechen aller in Serie geschalteten Elemente eine Spannung von mehreren 1000 V erreicht wird. Damit kann eine Strombegrenzung auch im Mittelspannungsbereich über 1000 V erfolgen.

In einer speziellen Anordnung können die elektrisch in Serie geschalteten Schutzelemente in einem Isolierstoffgehäuse, beispielsweise aus Keramik, integriert sein, wobei zum Zweck der elektrischen Isolation und der Wärmeleitung die Elemente von einer Isolierflüssigkeit, beispielsweise Öl, umgeben sein können, welche die elektrische Verlustleistung thermisch an die Gehäusewand ableitet. Die äußeren Elektroden 12 und 13, die ruß- und/oder kohlehaltigen Schichten 11 und die Zwischenelektroden sind dabei mechanisch in Reihe geschaltet und durch eine Kontaktkraft mit vorbestimmtem Druck zusammengepreßt. Zur Verbesserung der Wärmeableitung der Zwischenelektroden an die Isolations- und Kühlflüssigkeit können Teilflächen der Zwischenelektroden mit der Flüssigkeit in Berührung sein. Um die Schutzelemente im Kurzschlußfall vor Überlastung zu schützen, ist ein zweiter Strompfad mit einem Widerstand parallel geschaltet. Dieser Widerstand kann sich außerhalb des Isoliergehäuses befinden; er kann jedoch auch so in das Isoliergehäuse integriert sein, daß jede der Zwischenelektroden in elektrischem Kontakt mit dem z.B. als Widerstandsband ausgebildeten Parallelwiderstand steht, wobei sich die Kontaktstellen über die Länge des Widerstandsbandes gleichmäßig verteilen. Damit wird erreicht, daß beim Ansprechen eines der Schutzelemente der elektrische Strom auf den parallel geschalteten Widerstandsabschnitt kommutiert und der noch andauernde Stromfluß alle Schutzelemente sicher zum Ansprechen bringt.

In FIG 6 ist weiterhin eine elektrische Parallelschaltung von mehreren Schutzelementen für die Anwendung bei höheren Nennströmen ohne Erhöhung der konstruktiv erforderlichen Kontaktkraft dargestellt. Es bedeuten im einzelnen10, 10', 10" einzelne Hochstromwiderstände mit kohle- und/oder rußhaltigen Schichten 11, 11', 11" und zugehörigen Metallelektroden 12, 12' und 12" sowie 13, 13', 13", die derart mechanisch unter Zwischenlage von Isolationsplatten 61 bzw. 61' aufeinander gestapelt sind, daß sich kompakte Baueinheiten mit jeweils einem äußeren Anschluß ergeben. Für eine größere Anzahl parallelgeschalteter Schutzelemente können die in FIG 6 vorhandenen isolierenden Zwischenlagen 61, 61' ebenfalls durch rußhaltige Schichten, entsprechend den Schichten 11, 11', ersetzt werden.

Durch die elektrische Parallelschaltung der Schaltelemente läßt sich erreichen, daß die üblicherweise benötigte relativ große Anpreßkraft, die in der Größenordnung von 1 bis 2 kN liegt, bei Vergrößerung der stromtragenden Querschnitte nicht proportional vergrößert werden muß. In diesem Fall sind also die Schutzelemente elektrisch parallel und für die Anpreßkraft mechanisch in Reihe geschaltet. Somit wird auch vermieden, daß die sich im konstruktiven Aufbau, z.B. einem Kunststoffgehäuse, abstützende Anpreßkraft zu einer mechanischen Überlastung führt, oder daß der Aufbau mit erhöhtem Material- und Volumenaufwand ausgeführt werden muß.

Insbesondere bei Verwendung von zusätzlichen Isoliergehäusen kann es sinnvoll sein, eine gasdichte Kapselung vorzunehmen und ein Schutzgas, beispielsweise Wasserstoff oder Stickstoff, als Füllung zu verwenden. Der Gasdruck kann dabei eine oder mehrere Atmosphären betragen. Durch die Gasfüllung steht ein Parameter zur Verfügung, mit dem die Ausbildung von Lichtbögen kontrolliert werden kann. Außerdem ist damit eine Explosionssicherheit gewährleistet.

Üblicherweise ist ein erfindungsgemäßer veränderbarer Hochstromwiderstand mit einem Schaltelement in Reihe geschaltet. Statt der Reihenschaltung mit einem Leistungsschalter kann der beschriebene veränderbare Widerstand auch unmittelbar in einen Leistungsschalter integriert werden, wie es anhand FIG 7 gezeigt ist.

In FIG 7 enthält ein strombegrenzender Leistungsschalter 71 wenigstens zwei Kontakte 72 und 73, von denen mindestens einer beweglich ausgebildet ist und über ein Schaltschloß 74 geöffnet und geschlossen werden kann, das von einem thermischen und/oder magnetischen Auslöser 75 bzw. 76 ausgelöst werden kann. Jedem Kontakt 72 und 73 ist eine Lichtbogen-Laufschiene 77 und 78 zugeordnet. Nach Zündung von Lichtbogenfußpunkten wandert der Lichtbogen auf den Laufschienen in eine Löschkammer mit Löschblechen 79, wo eine zur Strombegrenzung und Bogenlöschung ausreichend hohe Bogenspannung aufgebaut wird. Bei sehr hohen Kurzschlußströmen, z.B. IK = 50 bis 100 kA, reicht jedoch der Bogenspannungsanstieg nicht mehr aus, um den Durchlaßstrom des Schalters auf unkritische Werte zu begrenzen und eine Beschädigung oder Zerstörung des Schaltgerätes zu vermeiden.

Für den Fall eines sehr hohen Kurzschlußstromes besitzt nun der Leistungsschalter 71 einen vorher beschriebenen Hochstromwiderstand 10. Dieses strombegrenzende Element ist nun aber nicht in den Hauptstrompfad geschaltet, sondem bildet mit der Zuleitung zu der einen Lichtbogen-laufschiene 77 einen Nebenstrompfad, welcher dann stromdurchflossen ist, wenn der Lichtbogen durch Zünden eines Fußpunktes auf dieser Laufschiene ansetzt. In vergleichbarer Schaltungsanordnung kann der veränderliche Hochstromwiderstand 10 anstatt in die Zuleitung der ersten Lichtbogen-laufschiene 77 in die Zuleitung der zweiten Lichtlaufschiene 78 geschaltet sein.

Der besondere Vorteil dieser Anordnung des veränderbaren Hochstromwiderstandes 10 ist darin begründet, daß bei allen Nennbetriebsbedingungen, wie Anlaufströme oder Überströme bei erhöhter Umgebungstemperatur, der elektrische Kreis unbeeinflußt bleibt und insbesondere eine Fehlabschaltung durch das strombegrenzende Element vermieden wird. Als Nebeneffekt werden Alterungsvorgänge wie Materialversprödung durch Aufheizung, thermische Überlastung von funktionswichtigen Formteilen und/oder dgl. sowie elektrische Verluste am strombegrenzenden Element vermieden.

Die Dimensionierung des strombegrenzenden Elementes orientiert sich daher nicht mehr am Nennstrombereich des zu schützenden Leistungsschalters, sondern an Bedingungen für eine sichere Lichtbogenkommutierung auf die Laufschienen und eine rasche Widerstandserhöhung.

Altemativ zur Beschaltung von Leistungsschaltern kann der erfindungsgemäße veränderbare Hochstromwiderstand auch mit Leistungshalbleitem als Schaltelemente kombiniert werden. Hierbei kann durch eine geeignete Dimensionierung des Hochstromwiderstandes der Durchlaßstrom und der Stromwärmeimpuls im Kurzschlußfall soweit begrenzt werden, daß der Leistungshalbleiter nicht geschädigt wird. Der Hochstromwiderstand ersetzt dann eine Halbleitersicherung.

Der erfindungsgemäße veränderbare Hochstromwiderstand kann auch in Verbindung mit Schützen oder Vakuumschützen als Schaltelemente geschaltet werden. Hier kann wiederum durch geeignete Dimensionierung des Hochstromwiderstandes dafür Sorge getragen werden, daß ein Verschweißen der Kontakte des Schützes vermieden wird. Dadurch ist dann eine schweißfreie Absicherung des Schützes gewährleistet.

Der vorstehend beschriebene veränderbare Hochstromwiderstand läßt sich in seiner Empfindlichkeit noch dadurch steigern, daß im Nennstrombetrieb nur ein Teilstrom über den Hochstromwiderstand fließt, während der andere Teilstrom über einen Parallelstromzweig geführt wird. Dabei kann durch geeignete Schaltmittel der Parallelstromzweig zu- bzw. abgeschaltet werden. Anhand FIG 8 wird letzteres deutlich.

In FIG 8 ist ein Leistungsschalterkontakt 80 - entsprechend Schalter 1 in FIG 1a - mit einem Schaltschloß 84 und thermischem und magnetischem Auslöser 85 und 86 dargestellt, zu dem eine Strombahn aus zwei Parallelstromzweigen mit Teilströmen I₁ und I₂ elektrisch in Reihe geschaltet ist. Dabei enthält der eine Parallelstromzweig den veränderbaren Hochstromwiderstand 10 und der andere Parallelstromzweig einen Kommutierungskontakt 82, dem ein Konstantwiderstand 83 in Reihe geschaltet ist. Der Widerstandswert des Konstantwiderstandes 83 kann so bemessen sein, daß er etwa dem niederohmigen Wert des veränderbaren Hochstromwiderstandes 10 entspricht, so daß der Strom I in etwa gleich große Teilströme I₁ und I₂ der Parallelstromzweige aufgeteilt wird. Dabei ist von Vorteil, daß die elektrische Verlustleistung der Parallelstrombahnen etwa halb so groß ist, wie eine einzige Strombahn mit veränderbarem Hochstromwiderstand 10.

Bei einem Überstrom genügender Höhe spricht nun der Magnetauslöser 86, des Leistungsschalters 80, an, entklinkt das Schaltschloß 84, und schlägt bei ausreichender magnetischer Erregung die Schaltkontakte 81 und 82 auf. Durch die Bogenspannung des Schalters kommutiert der Strom I2 auf den noch niederohmigen Parallelzweig. Durch die Erhöhung des Stromes um z. B. den Faktor 2 wird die Verlustleistung (∼I²) im veränderbaren Hochstromwiderstand 10 um den Faktor 4 erhöht, was zu einem raschen Temperaturanstieg an der Kontaktoberfläche des Widerstandselementes führt und durch Zersetzung des Bindemittels die wirksame Kontaktkraft durch Druckkräfte reduziert.

Die Stromaufteilung des Gesamtstromes I in die Teilströme I₁ und I₂ bei Nennstrombetrieb, sowie die Stromverlagerung des Gesamtstromes auf den veränderbaren Hochstromwiderstand 10 im Kurzschlußfall erlaubt eine getrennte Auslegung der Nennbetriebseigenschaften und der Kurzschlußeigenschaften der angegebenen Schaltung. Dadurch kann die Strombegrenzungseinrichtung im Nennbetrieb unempfindlich und im Kurzschlußfall empfindlich eingestellt werden.

## Patentansprüche

1. Veränderbarer Hochstromwiderstand, insbesondere zur Anwendung als Schutzelement in der Leistungsschalttechnik, mit zumindest Kohlenstoff (101) und einem Bindemittel (102) als Widerstandsmaterial, wobei wenigstens eine Grenzfläche einer kohle- und/oder rußhaltigen Schicht (11) mit einer Übergangszone (15) zu einem weiteren elektrischen Leiter (12, 13), insbesondere einer Elektrode, vorhanden ist, die von einer Anpreßkraft beaufschlagt wird, und wobei die kohle- und/oder rußhaltige Schicht (11) zur Einstellung eines niederohmigen Zustandes des Widerstandes durch die Kraft mit vorgegebenem erstem Wert auf den weiteren elektrischen Leiter (12, 13), insbesondere auf die Elektrode, gepreßt wird, **dadurch gekennzeichnet, daß** Mittel zur gezielten Beeinflussung der Anpreßkraft vorhanden sind, womit im Kurzschlußfall die Anpreßkraft in hinreichend kurzer Zeit auf einen solchen zweiten Wert verminderbar ist, bei dem der Widerstand in der Übergangszone (15) um wenigstens zwei Größenordnungen ansteigt, wobei die Verminderung der Kraft bei hinreichend großem Strom durch Druckentwicklung zwischen der kohle- und/oder rußhaltigen Schicht (11) und dem weiteren elektrischen Leiter (12, 13), insbesondere der Elektrode, erfolgt, und wobei die Druckentwicklung zur Verminderung der Kraft überwiegend durch thermische Zersetzung des Bindemittels (102) in gasförmige Zersetzungsprodukte erfolgt, indem die Temperatur des Bindemittels in der Übergangszone der kohle- und/oder rußhaltigen Schicht (11) zum weiteren elektrischen Leiter (12, 13), insbesondere der benachbarten Elektrode, durch die elektrische Verlustleistung bis zur Zersetzungstemperatur erhöht wird.

2. Veränderbarer Hochstromwiderstand nach Anspruch 1, **gekennzeichnet durch** zusätzliche Mittel (102, 21 bis 26, 31 bis 34) zur Verminderung der Kraft entsprechend dem fließenden Strom.

3. Veränderbarer Hochstromwiderstand nach Anspruch 1 und 2, **dadurch gekennzeichnet, daß** zur Ausbildung als Schutzelement im Kurzschlußfall bei Überschreiten einer vorgebbaren Stromschwelle, beispielsweise dem 15fachen von Iₙₑₙₙ, in einer Zeitdauer, die gegenüber der Netzperiode klein ist, der Widerstand in der Übergangszone (15) auf etwa das 100- bis 1000fache ansteigt und somit den Kurzschlußstrom auf ungefährliche Werte begrenzt.

4. Veränderbarer Hochstromwiderstand nach Anspruch 1, **dadurch gekennzeichnet, daß** die Übergangszone (15) von zwei ruß- und/oder kohlehaltigen Schichten begrenzt wird.

5. Veränderbarer Hochstromwiderstand nach Anspruch 1, **dadurch gekennzeichnet, daß** die Übergangszone (15) von wenigstens einer metallischen Elektrode (12, 13) und der ruß- und/oder kohlehaltigen Schicht (11) begrenzt wird.

6. Veränderbarer Hochstromwiderstand nach Anspruch 1, **dadurch gekennzeichnet, daß** die kohle- und/oder rußhaltige Schicht (11) mit einer Stärke von wenigstens 100 um, vorzugsweise 1 mm, zwischen zwei metallische Elektroden (12, 13) eingepreßt ist.

7. Veränderbarer Hochstromwiderstand nach Anspruch 5 und Anspruch 6, **dadurch gekennzeichnet, daß** die Oberfläche wenigstens einer der metallischen Elektroden strukturiert ist.

8. Veränderbarer Hochstromwiderstand nach Anspruch 7, **dadurch gekennzeichnet, daß** die kohle- und/oder rußhaltige Schicht (11) eine zur Strukturierung komplementäre Struktur besitzt und daß Kräfte übertragen werden.

9. Veränderbarer Hochstromwiderstand nach Anspruch 6, **dadurch gekennzeichnet, daß** die kohle- und/oder rußhaltige Schicht (11) wenigstens teilweise durch Kohlefasern in papier-, folien- oder filzartiger Konsistenz gebildet ist.

10. Veränderbarer Hochstromwiderstand nach Anspruch 1, **dadurch gekennzeichnet, daß** die kohle- und/oder rußhaltige Schicht (11) Bindemittel (102) aufweist.

11. Veränderbarer Hochstromwiderstand nach Anspruch 10, **dadurch gekennzeichnet, daß** das Bindemittel (102) Polymerwerkstoffe, beispielsweise Polyethylen, Polyester od. dgl., oder Wachse, Fette, Teere oder Peche ist.

12. Veränderbarer Hochstromwiderstandes nach Anspruch 10, **dadurch gekennzeichnet, daß** die Herstellung der Schicht (11) aus ruß- und feinkörnigem Kohlepulver (101) durch Zusatz von Teer und Pech als Bindemittel (102) und Verpressen der Schicht bei niedrigem Druck erfolgt ist, so daß nach Glühen der Schicht bei Temperaturen bis zu 1000°C eine elektrisch leitfähige poröse Schicht vorliegt.

13. Veränderbarer Hochstromwiderstand nach Anspruch 10, **dadurch gekennzeichnet, daß** ein Bindemittel (102) verwendet wird, das oberhalb vorgegebener Temperaturen in Zersetzungsprodukte zerfällt.

14. Veränderbarer Hochstromwiderstand nach Anspruch 1, **dadurch gekennzeichnet, daß** in der Übergangszone (15) die elektrische Verlustleistung das Bindemittel (102) zwischen den Kohle- und/ oder Rußpartikeln in gasförmige Zersetzungsprodukte (103) aufspaltet und die Zersetzungsgase eine Druckkraft erzeugen, die der Anpreßkraft entgegengesetzt ist.

15. Veränderbarer Hochstromwiderstand nach Anspruch 1 und 12, **dadurch gekennzeichnet, daß** zur Herstellung der Schicht (11) der geglühte Preßkörper mit Wachs oder Fetten getränkt wird, die bei Temperaturen oberhalb von 200°C in die gasförmigen Zersetzungsprodukte (103) zur Erzeugung des Druckes zerfallen.

16. Veränderbarer Hochstromwiderstand nach Anspruch 2, **dadurch gekennzeichnet, daß** als zusätzlich Mittel zur Verminderung der Kraft entsprechend dem fließenden Strom ein Elektromagnet (22 bis 24) vorhanden ist.

17. Veränderbarer Hochstromwiderstand nach Anspruch 16, **dadurch gekennzeichnet, daß** eine elektromagnetische Kraft zwischen Joch (22) und Anker (23) des Elektromagneten, der durch den Kurzschlußstrom selbst erregt wird, erzeugt wird.

18. Veränderbarer Hochstromwiderstand nach Anspruch 2, **dadurch gekennzeichnet, daß** als zusätzliche Mittel zur Verminderung der Kraft elektrische Aktoren (32), beispielsweise ein piezoelektrisches Stellelement zur Erzeugung hoher Kräfte bei kleinen Wegen, vorhanden sind.

19. Veränderbarer Hochstromwiderstand nach Anspruch 18, **dadurch gekennzeichnet, daß** mittels eines separaten Steuerkreises (43 bis 45), der beispielsweise bei Überschreiten einer einstellbaren Stromschwelle das piezoelektrische Stellelement ansteuert, vom als Elongator (32) ausgebildeten Stellelement die Kraft zwischen der Übergangszone (15) vermindert wird, so daß der Widerstand (10) hochohmig wird.

20. Veränderbarer Hochstromwiderstand nach Anspruch 1 oder einem der Ansprüche 16 bis 19, **gekennzeichnet durch** eine Kapselung in einem Isoliergehäuse (20, 30) unter Schutzgas, beispielsweise Wasserstoff oder Stickstoff.

21. Veränderbarer Hochstromwiderstand nach einem der vorhergehenden Ansprüche, **gekennzeichnet durch** einen Schichtaufbau (60), wobei mehrere kohle- und/oder rußhaltige Schichten (11, 11', 11") mechanisch hintereinander, elektrisch aber parallel geschaltet sind.

22. Veränderbarer Hochstromwiderstand nach einem der vorhergehenden Ansprüche, **dadurch gekennzeichnet, daß** zur Erhöhung der Kurzschluß-Ansprechempfindlichkeit Mittel (82,83) zur Kommutierung eines Teilstromes (I₁) von einem Parallelstromzweig auf den Hochstromwiderstand (10) vorhanden sind.

23. Schaltung unter Verwendung eines veränderbaren Hochstromwiderstandes nach Anspruch 1 oder einem der Ansprüche 2 bis 22, **gekennzeichnet durch** die Serienschaltung mehrerer Hochstromwiderstände (10) als Schutzelemente zur Strombegrenzung, so daß bei Ansprechen aller in Serie geschalteten Elemente eine Spannung von mehreren 1000 V erreicht wird, wodurch die Strombegrenzung auch im Mittelspannungsbereich von über 1000 V erfolgt.

24. Schaltung nach Anspruch 23, **dadurch gekennzeichnet, daß** mehrere Hochstromwiderstände (10) als Schutzelemente in einem gemeinsamen Isoliergehäuse mit Isolier- und Kühlflüssigkeit angeordnet sind und daß ein äußerer Parallelwiderstand vorhanden ist.

25. Schaltung nach Anspruch 24, **dadurch gekennzeichnet, daß** mehrere Hochstromwiderstände (10) als Schutzelemente in einem gemeinsamen Isoliergehäuse mit Isolier- und Kühlflüssigkeit angeordnet sind und daß Parallelwiderstände mit Kontaktstellen zu den einzelnen Schutzelementen vorhanden sind.

26. Schaltung unter Verwendung eines veränderbaren Hochstromwiderstandes nach Anspruch 1 oder einem der Ansprüche 2 bis 23, mit einem Leistungsschalter als Schaltelement, **dadurch gekennzeichnet, daß** der Hochstromwiderstand (10) und der Leistungsschalter (7) in einem gemeinsamen Gehäuse (70) integriert sind.

27. Schaltung nach Anspruch 26, **dadurch gekennzeichnet, daß** der veränderbare Hochstromwiderstand (10) in einem Nebenstrompfad zur Kontaktstelle des Leistungsschalters (71) angeordnet ist.

28. Schaltung nach Anspruch 27, **dadurch gekennzeichnet, daß** der veränderbare Hochstromwiderstand (10) im Kurzschlußfall erst dann vom Strom durchflossen wird, wenn die Stromkontakte (72, 73) geöffnet sind und ein Lichtbogen auf wenigstens eine der Lichtbogenlaufschienen (77, 78) kommutiert ist.

29. Schaltung unter Verwendung eines steuerbaren Hochstromwiderstandes nach Anspruch 1 oder einem der Ansprüche 2 bis 23, mit einem Leistungshalbleiter als Schaltelement, **dadurch gekennzeichnet, daß** durch geeignete Dimensionierung des Hochstromwiderstandes (10) der Durchlaßstrom und der Stromwärmeimpuls (I²T-Wert) im Kurzschlußfall soweit begrenzt werden, daß der Leistungshalbleiter nicht geschädigt wird.

30. Schaltung unter Verwendung eines steuerbaren Hochstromwiderstandes nach Anspruch 1 oder einem der Ansprüche 2 bis 23, mit einem Schütz als Schaltelement, **dadurch gekennzeichnet, daß** durch geeignete Dimensionierung des Hochstrom-widerstandes (10) der Durchlaßstrom und der Stromwärmeimpuls im Kurzschlußfall soweit begrenzt werden, daß ein Verschweißen der Kontakte des Schützes vermieden wird.

31. Schaltung unter Verwendung eines veränderbaren Hochstromwiderstandes nach Anspruch 1 oder einem der Ansprüche 2 bis 23, mit einem Vakuumschütz als Schaltelement, **dadurch gekennzeichnet, daß** durch geeignete Dimensionierung des Hochstromwiderstandes (10) das Vakuumschütz nicht durch Überlastung geschädigt wird.

## Claims

1. Variable high-current resistor, in particular for use as a protective element in power switching applications, having at least carbon (101) and a binder (102) as resistor material wherein at least one boundary surface of a carbon- and/or carbon-black-containing layer (11) with a transition zone (15) to a further electrical conductor (12, 13), in particular an electrode, is provided which is loaded by a contact pressure, and wherein the carbon- and/or carbon-black-containing layer (11) is pressed by the force with a preset first value against the other electrical conductor (12, 13), in particular against the electrode, to adjust a low-resistance state of the resistor, **characterised in that** means are provided for selectively influencing the contact pressure so that, in the event of a short-circuit, the contact pressure is reducible in a sufficiently short time to a second value at which the resistance in the transition zone (15) rises by at least two orders of magnitude, wherein the reduction in the force is achieved with a sufficiently great current through pressure evolution between the carbon- and/or carbon-black-containing layer (11) and the other electrical conductor (12, 13), in particular the electrode, and wherein the pressure evolution to reduce the force is effected predominantly by thermal decomposition of the binder (102) into gaseous decomposition products **in that** the temperature of the binder is raised in the transition zone of the carbon- and/or carbon-black-containing layer (11) to the other electrical conductor (12, 13), in particular the adjacent electrode, by the electrical power loss to the decomposition temperature.

2. Variable high-current resistor according to claim 1, **characterised by** additional means (102, 21 to 26, 31 to 34) for reducing the force according to the flowing current.

3. Variable high-current resistor according to claims 1 and 2, **characterised in that**, for design as a protective element, the resistance in the transition zone (15) rises to about 100 to 1000 times and thus limits the short-circuit current to harmless values within a time which is short in comparison to the system power-supply period when a predeterminable current threshold is exceeded, for example 15 times Iₙₒₘᵢₙₐₗ in the event of a short-circuit.

4. Variable high-current resistor according to claim 1, **characterised in that** the transition zone (15) is limited by two carbon-black- and/or carbon-containing layers.

5. Variable high-current resistor according to claim 1, **characterised in that** the transition zone (15) is limited by at least one metallic electrode (12, 13) and the carbon-black- and/or carbon-containing layer (11).

6. Variable high-current resistor according to claim 1, **characterised in that** the carbon- and/or carbon-black-containing layer (11) having a thickness of at least 100 µm, preferably 1 mm, is compressed between two metallic electrodes (12, 13).

7. Variable high-current resistor according to claims 5 and claim 6, **characterised in that** the surface of at least one of the metallic electrodes is textured.

8. Variable high-current resistor according to claim 7, **characterised in that** the carbon- and/or carbon-black-containing layer (11) has a complementary texture for texturing and that forces are transmitted.

9. Variable high-current resistor according to claim 6, **characterised in that** the carbon- and/or carbon-black-containing layer (11) is formed at least partially by carbon fibres with a paper-, film-, or mat-type consistency.

10. Variable high-current resistor according to claim 1, **characterised in that** the carbon- and/or carbon-black-containing layer (11) has binders (102).

11. Variable high-current resistor according to claim 10, **characterised in that** the binder (102) consists of polymer material such as polyethylene, polyester or the like or waxes, grease, tars or pitches.

12. Variable high-current resistor according to claim 10, **characterised in that** the manufacture of the layer (11) of carbon-black and fine-grained carbon powder (101) takes place with the addition of tar and pitch as binder (102) and compressing of the layer at a low pressure so an electrically conductive, porous layer is formed after annealing of the layer at temperatures of up to 1000°C.

13. Variable high-current resistor according to claim 10, **characterised in that** a binder (102) which decomposes into decomposition products above predetermined temperatures is used.

14. Variable high-current resistor according to claim 1, **characterised in that** the electric power loss splits the binder (102) between the carbon and/or carbon-black particles into gaseous decomposition products (103), and the decomposition gases produce a compressive force opposing the contact pressure, in the transition zone (15).

15. Variable high-current resistor according to claims 1 and 12, **characterised in that** the annealed compact is impregnated with wax or grease which decompose into gaseous decomposition products (103) at temperatures above 200°C to generate the pressure, to produce the layer (11).

16. Variable high-current resistor according to claim 2, **characterised in that** an electromagnet (22 to 24) is provided as additional means for reducing the force according to the flowing current.

17. Variable high-current resistor according to claim 16, **characterised in that** an electromagnetic force is produced between yoke (22) and armature (23) of the electromagnet, which is excited by the short-circuit current itself.

18. Variable high-current resistor according to claim 2, **characterised in that** electrical actuators (32), for example a piezoelectric actuating element, are provided as additional means for reducing the force, to produce high forces in the case of small paths.

19. Variable high-current resistor according to claim 18, **characterised in that** the force is reduced between the transition zone (15) by the actuating element designed as an elongator (32) by means of a separate control circuit (43 to 45) which triggers the piezoelectric actuating element, for example when an adjustable current threshold is exceeded, so the resistor (10) becomes highly resistive.

20. Variable high-current resistor according to claim 1 or one of claims 16 to 19, **characterised by** encapsulation in an insulating housing (20, 30) under inert gas, for example hydrogen or nitrogen.

21. Variable high-current resistor according to one of the preceding claims, **characterised by** a layered - structure (60), a plurality of carbon- and/or carbon-black-containing layers (11, 11', 11") being mechanically connected in series but electrically connected in parallel.

22. Variable high-current resistor according to one of the preceding claims, **characterised in that**, to increase the short-circuit responsivity, means (82, 83) are provided for commutating a partial current I₁ from a parallel sub-circuit to the high-current resistor (10).

23. Circuit arrangement making use of a variable high-current resistor according to claim 1 or one of claims 2 to 22, **characterised by** the series connection of a plurality of variable high-current resistors (10) as protective elements for limiting current so a voltage of several 1000 V is reached when all series-connected elements respond, with the result that the current is also limited in the mid-voltage range above 1000 V.

24. Circuit arrangement according to claim 23, **characterised in that** several high-current resistors (10) are arranged as protective elements in a common insulating housing having insulating and cooling fluid and that an outer parallel resistor is provided.

25. Circuit arrangement according to claim 24, **characterised in that** several high-current resistors (10) are arranged as protective elements in a common insulating housing having insulating and cooling fluid and that parallel resistors with points of contact to the individual protective elements are provided.

26. Circuit arrangement making use of a variable high-current resistor according to claim 1 or one of claims 2 to 23, with a circuit-breaker as a circuit element, **characterised in that** the high-current resistor (10) and circuit-breaker (7) are integrated in a common housing (70).

27. Circuit arrangement according to claim 26, **characterised in that** the variable high-current resistor (10) is arranged in a secondary current circuit leading to the point of contact of the circuit-breaker (71).

28. Circuit arrangement according to claim 27, **characterised in that**, in the event of a short-circuit, the variable high-current resistor (10) is only permeated by current when the current contacts (72, 73) are opened and an arc is commutated onto at least one of the arc bus-bars (77, 78).

29. Circuit arrangement making use of a controllable high-current resistor according to claim 1 or one of claims 2 to 23, with a power semiconductor as switching element, **characterised in that** the cut-off current and the Joulean heat pulse (I²T value) are limited in the event of a short-circuit by suitable dimensioning of the high-current resistor (10) to such an extent that the power semiconductor is not damaged.

30. Circuit arrangement making use of a controllable high-current resistor according to claim 1 or one of claims 2 to 23, with a contactor as switching element, **characterised in that** the cut-off current and the Joulean heat pulse are limited in the event of a short-circuit by suitable dimensioning of the high-current resistor (10) to such an extent that welding of the contacts of the contactor is avoided.

31. Circuit arrangement making use of a variable high-current resistor according to claim 1 or one of claims 2 to 23, with a vacuum contactor as switching element, **characterised in that** the vacuum contactor is not damaged by overloading owing to suitable dimensioning of the high-current resistor (10).

## Revendications

1. Résistance pouvant être modifiée pour courant fort, notamment pour l'utilisation en tant qu'élément de protection dans la technique des interrupteurs de puissance, comportant, comme matériau résistif au moins du carbone (101) et un liant (102), dans laquelle il est prévu au moins un surface limite d'une couche (11) contenant du charbon et/ou de la suie comportant une zone (15) de transition vers un conducteur électrique supplémentaire (12, 13), notamment une électrode, qui est soumise à une force de compression, et dans laquelle la couche (11) contenant du charbon et/ou de la suie est comprimée pour régler un état basse impédance de la résistance par la force ayant une première valeur prescrite sur le conducteur électrique supplémentaire (12, 13), notamment sur l'électrode, **caractérisée en ce que** des moyens sont prévus pour influencer de manière ciblée la force de compression, par lesquels, en cas de court-circuit, la force de compression peut être diminuée en un temps suffisamment court à une seconde valeur telle que pour celle-ci la résistance dans la zone de transition (15) augmente d'au moins deux ordres de grandeur, la diminution de la force s'effectuant, pour un courant suffisamment grand, par apparition de pression entre la couche (11) contenant du charbon et/ou de la suie et le conducteur (12, 13) électrique supplémentaire, notamment l'électrode, et l'apparition de pression pour diminuer la force s'effectuant principalement par décomposition thermique du liant (102) en produits gazeux de décomposition, par le fait que la température du liant dans la zone de transition de la couche (11) contenant du charbon et/ou de la suie vers le conducteur électrique supplémentaire (12, 13), notamment l'électrode voisine, est élevée par les pertes de puissance électrique jusqu'à la température de décomposition.

2. Résistance pouvant être modifiée pour courant fort suivant la revendication 1,
**caractérisée par** des moyens supplémentaires (102, 21 à 26, 31 à 34) de diminution de la force en fonction du courant passant.

3. Résistance pouvant être modifiée pour courant fort selon la revendication 1 et 2, **caractérisée en ce que** la résistance, pour former un élément de protection en cas de court-circuit lorsqu'un seuil du courant pouvant être prescrit, par exemple 15 fois Iₙₒₘᵢₙₐₗ, est dépassé pendant une durée qui est petite par rapport à la période du réseau, augmente dans la zone (15) de transition à environ 100 à 1000 fois sa valeur et limite ainsi le courant de court-circuit à des valeurs non dangereuses.

4. Résistance pouvant être modifiée pour courant fort suivant la revendication 1, **caractérisée en ce que** la zone (15) de transition est délimitée par deux couches contenant de la suie et/ou du charbon.

5. Résistance pouvant être modifiée pour courant fort suivant la revendication 1, **caractérisée en ce que** la zone (15) de transition est délimitée par au moins une électrode métallique (12, 13) et la couche (11) contenant de la suie et/ou du charbon.

6. Résistance pouvant être modifiée pour courant fort suivant la revendication 1, **caractérisée en ce que** la couche (11) contenant du charbon et/ou de la suie est insérée, avec une épaisseur d'au moins 100 µm, de préférence 1 mm entre deux électrodes métalliques (12, 13).

7. Résistance pouvant être modifiée pour courant fort selon la revendication 5 et la revendication 6, **caractérisée en ce que** la surface d'au moins l'une des électrodes métalliques est structurée.

8. Résistance pouvant être modifiée pour courant fort selon la revendication 7, **caractérisée en ce que** la couche (11) contenant du charbon et/ou de la suie a une structure complémentaire de la structuration et que des forces sont transmises.

9. Résistance pouvant être modifiée pour courant fort selon la revendication 6, **caractérisée en ce que** la couche (11) contenant du charbon et/ou de la suie est formée, au moins en partie, de fibres de carbone de la consistance du papier, d'une feuille ou d'un feutre.

10. Résistance pouvant être modifiée pour courant fort selon la revendication 1,
**caractérisée en ce que** la couche (11) contenant du charbon et/ou de la suie comporte un liant (102).

11. Résistance pouvant être modifiée pour courant fort selon la revendication 10, **caractérisée en ce que** le liant (102) est constitué de matériaux polymères, par exemple de polyéthylène, de polyester ou similaire, de cires, de graisses, de goudrons ou de poix.

12. Résistance pouvant être modifiée pour courant fort selon la revendication 10, **caractérisée en ce que** la fabrication de la couche (11) en poudre (101) de charbon à grain fin de suie est effectuée par addition de goudrons et de poix en tant que liants (102) et compression de la couche à basse pression, de sorte à avoir, après avoir calciné la couche à des températures allant jusqu'à 1000°C, une couche poreuse conductrice de l'électricité.

13. Résistance pouvant être modifiée pour courant fort selon la revendication 10, **caractérisée en ce qu'**il est utilisé un liant (102), qui se décompose en produits de décomposition au-dessus de températures prescrites.

14. Résistance pouvant être modifiée pour courant fort selon la revendication 1, **caractérisée en ce que** dans la zone (15) de transition, les pertes de puissance électrique décomposent le liant (102) entre les particules de charbon et/ou de suie en produits (103) de décomposition gazeux et les gaz de décomposition exercent une force de pression opposée à la force de compression.

15. Résistance pouvant être modifiée pour courant fort selon les revendications 1 et 12, **caractérisée en ce que**, pour fabriquer la couche (11), le corps comprimé calciné est imprégné de cires ou de graisses, qui se décomposent à des températures supérieures à 200°C en les produits (103) de décomposition gazeux pour la production de la pression.

16. Résistance pouvant être modifiée pour courant fort selon la revendication 2, **caractérisée en ce qu'**il est prévu comme moyen supplémentaire pour diminuer la force en fonction du courant passant à un électro-aimant (22 à 24).

17. Résistance pouvant être modifiée pour courant fort selon la revendication 16, **caractérisée en ce qu'**une force électro-magnétique entre la culasse (22) et l'armature (23) de l'électro-aimant qui est induite par le courant du court-circuit lui-même, est produite.

18. Résistance pouvant être modifiée pour courant fort selon la revendication 2, **caractérisée en ce qu'**il est prévu comme moyen supplémentaire pour diminuer la force des actionneurs (32) électriques, par exemple un élément de réglage piézo-électrique destiné à la production de forces intenses pour de petites courses.

19. Résistance pouvant être modifiée pour courant fort selon la revendication 18, **caractérisée en ce que** la force dans la zone (15) de transition est diminuée par l'élément de réglage sous forme de dispositif (32) d'élongation, au moyen d'un circuit (43 à 45) de commande distinct, qui commande l'élément de réglage piézo-électrique par exemple lorsqu'un seuil de courant pouvant être réglé est dépassé, de sorte que la résistance (10) soit à haute impédance.

20. Résistance pouvant être modifiée pour courant fort selon la revendication 1 ou l'une des revendications 16 à 19, **caractérisée par** une encapsulation dans un boîtier isolant (20, 30) sous gaz de protection, par exemple de l'hydrogène ou de l'azote.

21. Résistance pouvant être modifiée pour courant fort suivant l'une des revendications précédentes, **caractérisée par** une structure (60) stratifiée, plusieurs couches (11, 11', 11") contenant du charbon et/ou de la suie étant mises l'une derrière l'autre mécaniquement mais étant branchées électriquement en parallèle.

22. Résistance pouvant être modifiée pour courant fort suivant l'une des revendications précédentes, **caractérisée en ce qu'**il est prévu pour augmenter la sensibilité de réaction aux court-circuits, des moyens (82, 83) de commutation d'un courant partiel (I₁) d'une branche de courant parallèle sur la résistance (10) pour courant fort.

23. Circuit utilisant une résistance pouvant être modifiée pour courant fort suivant la revendication 1 ou l'une des revendications 2 à 22, **caractérisé par** le branchement en série de plusieurs résistances (10) pour courant fort en tant qu'éléments de protection destiné à limiter le courant, de sorte à obtenir, lorsque tous les éléments branchés en série répondent, une tension de plusieurs milliers de volts, ce qui limite le courant également dans le domaine des moyennes tensions au-dessus de 1000 V.

24. Circuit suivant la revendication 23, **caractérisé en ce que** plusieurs résistances (10) pour courant fort sont montées en tant qu'éléments de protection dans un boîtier isolant commun ayant un fluide d'isolement et de refroidissement, et il est prévu une résistance extérieure en parallèle.

25. Circuit suivant la revendication 24, **caractérisé en ce que** plusieurs résistances (10) pour courant fort sont montées en tant qu'éléments de protection dans un boîtier isolant commun comportant un fluide d'isolement et de refroidissement et il est prévu des résistances en parallèle comportant des points de contact avec les divers éléments de protection.

26. Circuit utilisant une résistance pouvant être modifiée pour courant fort suivant la revendication 1 ou l'une des revendications 2 à 23, comportant un interrupteur de puissance en tant qu'élément de protection, **caractérisé en ce que** la résistance (10) pour courant fort et l'interrupteur (7) de puissance sont intégrés à un boîtier commun (70).

27. Circuit suivant la revendication 26, **caractérisé en ce que** la résistance pouvant être modifiée pour courant fort est montée dans une voie auxiliaire de courant vers le point de contact de l'interrupteur (71) de puissance.

28. Circuit suivant la revendication 27, **caractérisé en ce que** la résistance (10) pouvant être modifiée pour courant fort n'est traversée, en cas de court-circuit, par le courant que lorsque les contacts (72, 73) pour le courant sont ouverts et un arc électrique est commuté sur au moins l'un des rails (77, 78) de propagation d'arc électrique.

29. Circuit utilisant une résistance pouvant être commandée pour courant fort suivant la revendication 1 ou l'une des revendications 2 à 23, comportant un semi-conducteur de puissance en tant qu'élément de commutation, **caractérisé en ce que** le courant passant et l'impulsion par effet joule (valeur I²T) sont limités en cas de court-circuit par un dimensionnement approprié de la résistance (10) pour courant fort, tant que le semi-conducteur de puissance n'est pas endommagé.

30. Circuit utilisant une résistance pouvant être commandée pour courant fort suivant la revendication 1 ou l'une des revendications 2 à 23, comportant un contacteur comme élément de commutation, **caractérisé en ce que** le courant passant et l'impulsion par effet joule sont limités en cas de court-circuit par un dimensionnement approprié de la résistance (10) pour courant fort tant qu'une soudure des contacts du contacteur est empêchée.

31. Circuit utilisant une résistance pouvant être modifiée pour courant fort suivant la revendication 1 ou l'un des revendications 2 à 23, comportant un contacteur à vide en tant qu'élément de commutation, **caractérisé en ce que** le contacteur à vide n'est pas endommagé par une surcharge grâce à un dimensionnement approprié de la résistance (10) pour courant fort.
